(19) Europäisches Patentamt

European Patent Office

Office européen des brevets

(11) EP 0 708 131 B1

(12) EUROPÄISCHE PATENTSCHRIFT

(45) Veröffentlichungstag und Bekanntmachung des Hinweises auf die Patenterteilung:
04.03.1998 Patentblatt 1998/10

(51) Int. Cl.$^6$: C08J 3/12, C08K 5/32, C08L 27/18

(21) Anmeldenummer: 95116223.9

(22) Anmeldetag: 14.10.1995

(54) **Verfahren zur Herstellung rieselfähiger Polytetrafluorethylen-Formpulver und deren Verwendung**

Process for preparing free-flowing polytetrafluoroethylene moulding powders und use thereof

Procédé de préparation de poudres à mouler coulables en polytétrafluoréthylène et leur utilisation

(84) Benannte Vertragsstaaten:
BE DE FR GB IT NL

(30) Priorität: 21.10.1994 DE 4437685

(43) Veröffentlichungstag der Anmeldung:
24.04.1996 Patentblatt 1996/17

(73) Patentinhaber: Dyneon GmbH
84504 Burgkirchen (DE)

(72) Erfinder: Zipplies, Tilman, Dr.
D-84489 Burghausen (DE)

(56) Entgegenhaltungen:
EP-A- 0 432 718          EP-A- 0 524 585
GB-A- 1 076 642          US-A- 3 882 217

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Herstellung rieselfähiger Formpulver, enthaltend mindestens ein, gegebenenfalls modifiziertes, Suspensions-Polytetrafluorethylen, eine wirksame Menge an mindestens einem Trialkylaminoxid und gegebenenfalls einen oder mehrere Füllstoffe, ein Verfahren zu deren Herstellung und ihre Verwendung zur Herstellung von Sinterkörpern.

Bei Polymeren aus Tetrafluorethylen (TFE) werden zwei Typen unterschieden, nämlich aus der Schmelze verarbeitbare Thermoplaste und nicht aus der Schmelze verarbeitbare Typen, in erster Linie das Homopolymere, also das Polytetrafluorethylen (PTFE) selbst, daneben aber auch die sogenannten "modifizierten" TFE-Polymeren, die (ein) weitere(s) Comonomere(s) in einer so geringen Menge - meist ≤ 2 Mol-%, vorzugsweise ≤ 0,5 Mol-% - enthalten, daß der Charakter als "nicht aus der Schmelze verarbeitbar" erhalten bleibt. Solche Comonomere sind beispielsweise Chlortrifluorethylen, Hexafluorisobutylen, 1-Perfluorbuten, Perfluoralkylperfluorvinylether mit einem Perfluoralkylrest von 1 bis 5 C-Atomen, insbesondere Perfluorpropylperfluorvinylether und Hexafluorpropylen. Die Erfindung bezieht sich auf solche nicht aus der Schmelze verarbeitbare Typen. Sie weisen eine scheinbare Schmelzviskosität von mindestens $1 \times 10^8$ Pas bei 380 °C auf, gemessen nach dem Kriechtest [Ajroldi et al., J. Appl. Polym. Sci., 14 (1970), Seite 79 ff.].

Für Formpulver werden solche nicht aus der Schmelze verarbeitbare TFE-Polymeren herangezogen, die nach dem Suspensions-Polymerisationsverfahren erhalten werden. Bei diesem Verfahren werden allenfalls geringe Mengen an Dispergiermittel eingesetzt und die Polymerisation unter intensiver Durchmischung durchgeführt. Das nach diesem Verfahren erhaltene Polymer, das als Rohpolymerisat eine mittlere Teilchengröße von etwa 800 bis 1200 μm und höher besitzt, wird einem der bekannten Zerkleinerungsprozesse für PTFE unterworfen - beispielsweise Mahlen in einer Hammermühle oder Naßschneiden - und dabei auf eine mittlere Teilchengröße von 20 bis 100 μm feinzerteilt. Desgleichen sollen die eingesetzten Füllstoffe in feinzerteilter Form vorliegen, das heißt etwa eine mittlere Teilchengröße besitzen wie das gemahlene Polymer.

Die so erhaltene Mischung besitzt schlechte Verarbeitungseigenschaften und wird deshalb agglomeriert. Das übliche Agglomerationsverfahren ist dem Fachmann bekannt, beispielsweise aus US-A 3 527 857 und 3 781 258. In diesem Verfahren wird das mit den Füllstoffen vorgemischte Polymerpulver in einem flüssigen Agglomeriermedium suspendiert, das aus Wasser und einer organischen Flüssigkeit besteht, wobei diese organische Flüssigkeit imstande sein muß, das Polymerpulver zu benetzen und außerdem in Wasser höchstens bis zu 15 Gew.-%, vorzugsweise bis zu 3 Gew.-%, löslich sein darf.

Aus der EP-A-432 718 ist ein Verfahren zur Herstellung eines agglomerierten Formpulvers bekannt, bestehend aus Agglomeraten eines nicht aus der Schmelze verarbeitbaren Tetrafluorethylen-Polymeren mit mindestens einem feinzerteilten Füllstoff aus einem hydrophoben Material, wobei der Füllstoff in den agglomerierten Teilchen in weitgehend gleichmäßiger Verteilung enthalten ist, durch Vormischen eines feinzerteilten, granularen Tetrafluorethylen-Polymerpulvers und des Füllstoffs, Suspendieren der Mischung in einem flüssigen Agglomerationsmedium aus Wasser und einer das Tetrafluorethylen-Polymerpulver benetzenden, in Wasser höchstens bis zu 15 Gew.-% löslichen organischen Flüssigkeit und Agglomeration unter Rühren, das dadurch gekennzeichnet ist, daß man nach Beendigung des Agglomerationsvorgangs die gebildeten Agglomerate in einem flüssigen Medium unter waschartiger Bewegung mit einem oberflächenaktiven Mittel in einer Menge behandelt, die ausreichend ist, eine Benetzung des hydrophoben Füllstoffmaterials zu bewirken. Das oberflächenaktive Mittel kann ein nichtionisches Tensid sein, beispielsweise ein Aminoxid. Zweck dieser Behandlung ist die Entfernung von lose anhaftendem Füllstoff.

Bei der Herstellung von Formkörpern aus solchen Agglomeraten liegt ein großes Problem in der Verfärbung. Da TFE-Polymere teuer sind, werden an die Qualität der daraus hergestellten Formkörper auch hohe Anforderungen gestellt. Die US-A 3 882 217 betrifft nun ein Verfahren zur Herstellung eines gegebenenfalls mit Füllstoffen versehenen rieselfähigen PTFE-Formpulvers durch Bewegen eines feinteiligen PTFE-Pulvers, das gegebenenfalls einen Füllstoff enthält, mit einem Wasser enthaltenden Medium zwecks Agglomeration und Trocknen der agglomerierte Teilchen enthaltenden Mischung, das dadurch gekennzeichnet ist, daß das feinteilige PTFE-Pulver mit einer wäßrigen Lösung eines flüchtigen nichtionischen oberflächenaktiven Mittels benetzt wird, wobei die Konzentration des oberflächenaktiven Mittels mindestens das 40fache der kritischen Mizellenkonzentration bei 20 °C beträgt. Diese flüchtigen nichtionischen oberflächenaktiven Mittel - als besonders geeignet sind die Kondensate von Ethylenoxid und Alkylphenolen beziehungsweise langkettigen Alkoholen genannt - bewirken eine erhebliche Verbesserung der Verfärbung.

Es wurde nun gefunden, daß mit bestimmten flüchtigen oberflächenaktiven Mitteln von zwitterionischem Charakter, nämlich Trialkylaminoxiden, die Verfärbung noch erheblich stärker unterdrückt werden kann als mit den bekannten Oxethylaten.

Trialkylaminoxide sind bekannte oberflächenaktive Mittel. Sie werden üblicherweise durch Oxidation der entsprechenden tertiären Amine in wäßrigen Wasserstoffperoxid-Lösungen hergestellt (US-A 3 215 741 und 3 283 007). Sie werden beispielsweise als Emulgator für wäßrige Dispersionen zur Textilausrüstung (EP-A 471 416), als Faserpräparationsmittel (EP-A 229 340) oder als Dispergiermittel für die Imprägnierung von Garnen und textilen Flächengebilden sowie als Dispergiermittel für die Aufkonzentrierung von Fluorpolymer-Dispersionen (US-A 5 219 910) eingesetzt.

Bevorzugt sind Aminoxide der Formel

$$R^1R^2R^3N \to O$$

in der $R^1$ einen Alkylrest von 6 bis 22 C-Atomen oder ein Gemisch solcher Alkylreste, $R^2$ die Bedeutung von $R^1$ hat oder für einen Alkylrest von 1 bis 4 C-Atomen steht und $R^3$ ein Alkylrest von 1 bis 4 C-Atomen bedeutet. Vorzugsweise bedeuten $R^2$ und $R^3$ Methylgruppen.

Die erfindungsgemäß eingesetzten Aminoxide sind viel flüchtiger als die bisher eingesetzten Oxethylate, die sich beim Erhitzen an der Luft unter Bildung unerwünschter flüchtiger und fester Abbauprodukte zersetzen, wobei sich die flüchtigen an kühleren Flächen der Abluftwege niederschlagen können. Im Gegensatz dazu ergeben die Aminoxide nur leichtflüchtige und nichttoxische Zersetzungsprodukte.

Ein weiterer Vorteil im Einsatz der Aminoxide liegt in der geringeren Anwendungskonzentration, die von 0,1 bis 2 Gew.-%, bezogen auf Polymer und gegebenenfalls Füllstoff, betragt. Im allgemeinen genügen bis zu 1 Gew.-% an Aminoxid, vorzugsweise 0,2 bis 0,5 Gew.-%.

Ein besonderer Vorteil der Erfindung liegt darin, daß aufgrund der höheren Flüchtigkeit der Aminoxide deren Entfernung aus den Formkörpern schon beim Trocknen bei Temperaturen von bis zu etwa 150 °C erfolgen kann. Die Abtrennung der flüchtigen Bestandteile bei dieser niedrigeren Temperatur ist apparativ sehr viel weniger aufwendig als die entsprechende Abtrennung im Verlaufe des Sinterns. Die Entfernung der Aminoxide bei niedrigen Temperaturen ist vor allem dann vorteilhaft, wenn ein weicheres Korn der Formpulver und verbesserte mechanische Eigenschaften der Sinterkörper angestrebt werden.

Ein entscheidender Vorteil der Erfindung liegt darin, daS die Verfärbung der Formkörper beim Sintern im Vergleich zum Stand der Technik noch erheblich verbessert wird.

Sofern das erfindungsgemäß hergestellte Formpulver Füllstoffe enthält, kommen hierfür die üblichen Produkte in Betracht, vor allem Ruß, Graphit, Kohlepulver, Glimmer, Talkum, Glas in Form von Pulver, Fasern, Kugeln oder Hohlkugeln, Siliciumdioxid, zum Beispiel in Form von Quarz, Silikate, Metalloxide und -doppeloxide wie Eisenoxid, Kobaltoxid, Chromoxid, Aluminiumoxid, Titanoxid, Antimontrioxid, Bleioxid, Kobaltblau, Ultramarin, organische Pigmente wie Benzidin- oder Phthalocyaninfarbstoffe, salzartige Stoffe wie Kalium- oder Bariumtitanat, ferner auch Metalle in Form von Flocken, Schuppen oder Pulvern wie Bronze, Kupfer, Aluminium oder Messing sowie Synthesefasern aus hochtemperaturbeständigen Kunststoffen wie zum Beispiel Polyimid- oder Aramidfasern.

Der Gewichtsanteil an Füllstoff, bezogen auf die Summe aus Polymer und Füllstoff, liegt bei bis zu 75 Gew.-%, vorzugsweise 5 bis 70 Gew.-%, insbesondere 15 bis 60 Gew.-%.

Die Herstellung der erfindungsgemäß hergestellten Formpulver kann nach an sich bekannten Methoden erfolgen, beispielsweise nach dem Verfahren der US-A 3 882 217, wobei erfindungsgemäß ein Trialkylaminoxid als nicht-ionisches Tensid verwendet wird.

Die Erfindung betrifft somit ein Verfahren zur Herstellung eines rieselfähigen Formpulvers, bei dem ein feinteiliges, nicht rieselfähiges Pulver aus mindestens einem, gegebenenfalls modifizierten, Suspensions-Polytetrafluorethylen in einem wäßrigen Medium, das mindestens ein Trialkylaminoxid enthält, agglomeriert wird und die Agglomerate getrocknet werden.

Die Erfindung wird in den folgenden Beispielen näher erläutert.

Beispiel 1

1,5 kg feinteiliges Suspensions-PTFE ($d_{50}$ 20 bis 30 μm) werden mit 500 g feinteiliger Kohle ($d_{50}$ 20 bis 30 μm) in einem Fluid-Mischer gemischt. Die entstehende nichtrieselfähige homogene Mischung wird mit 900 g einer 0,5gew.%igen Lösung von Lauryldimethylaminoxid versetzt und intensiv vermischt. Das resultierende feuchte Pulver wird einer Wälzbehandlung unterworfen und bei 180 °C 12 Stunden getrocknet. Anschließend wird das abgekühlte Produkt durch Sieben von Grob- und Feingut befreit. Die resultierenden Agglomerate haben einen mittleren Teilchendurchmesser von 700 μm, ein Schüttgewicht von 600 g/l und eine gute Rieselfähigkeit.

Die Eigenschaften des Formpulvers können durch Art und Dauer der Wälzbehandlung in gewissen Grenzen variiert werden.

Beispiel 2

1,5 kg feinteiliges Suspensions-PTFE ($d_{50}$ 20 bis 30 μm) werden mit 500 g gemahlener Glasfaser ($d_{50}$ 30 bis 50 μm) in einem Fluid-Mischer gemischt. Die entstehende nichtrieselfähige Mischung wird mit 800 g einer 0,5gew.%igen Lösung von Lauryldimethylaminoxid versetzt und intensiv vermischt. Das resultierende feuchte Pulver wird einer Wälzbehandlung unterworfen und bei 280 °C 12 Stunden getrocknet. Anschließend wird das abgekühlte Produkt durch Sieben von Grob- und Feingut befreit. Die resultierenden Agglomerate haben einen mittleren Teilchendurchmesser von 750 μm, ein Schüttgewicht von 650 g/l und eine gute Rieselfähigkeit.

Beispiel 3

1,7 kg feinteiliges Suspensions-PTFE ($d_{50}$ 20 bis 30 μm) werden mit 300 g feinteiligem Graphit ($d_{50}$ 30

μm) in einem Fluid-Mischer gemischt. Die entstehende nichtrieselfähige Mischung wird mit 900 g einer 0,5gew.%igen Lösung von Cetyl-dimethylaminoxid versetzt und intensiv vermischt. Das resultierende feuchte Pulver wird einer Wälzbehandlung unterworfen und bei 280 °C 12 Stunden getrocknet. Anschließend wird das abgekühlte Produkt durch Sieben von Grob- und Feingut befreit. Die resultierenden Agglomerate haben einen mittleren Teilchendurchmesser von 790 μm, ein Schüttgewicht von 600 g/l und eine gute Rieselfähigkeit.

Beispiel 4

0,8 kg feinteiliges Suspensions-PTFE ($d_{50}$ 20 bis 30 μm) werden mit 1,2 kg feinem Bronzepulver ($d_{50}$ 30 bis 50 μm) in einem Fluid-Mischer gemischt. Die entstehende nichtrieselfähige Mischung wird mit 800 g einer 0,5gew.%igen Lösung von Cetyl-dimethylaminoxid versetzt und intensiv vermischt. Das resultierende feuchte Pulver wird einer Wälzbehandlung unterworfen und bei 280 °C 12 Stunden getrocknet. Anschließend wird das abgekühlte Produkt durch Sieben von Grob- und Feingut befreit. Die resultierenden Agglomerate haben einen mittleren Teilchendurchmesser von 750 μm, ein Schüttgewicht von 1100 g/l und eine gute Rieselfähigkeit.

**Patentansprüche**

1. Verfahren zur Herstellung eines rieselfähigen Formpulvers, dadurch gekennzeichnet, daß ein feinteiliges, nicht rieselfähiges Pulver aus mindestens einem, gegebenenfalls modifizierten, Suspensions-Polytetrafluorethylen in einem wäßrigen Medium, das mindestens ein Trialkylaminoxid enthält, agglomeriert wird und die Agglomerate getrocknet werden.

2. Verfahren nach Anspruch 1, dadurch gekennzeichnet, daß mindestens ein Füllstoff zugesetzt wird, so daß das Formpulver bis zu 75 Gew.-% Füllstoff(e) und, ergänzend auf 100 Gew.-%, gegebenenfalls modifiziertes Polytetrafluorethylen enthält.

3. Verfahren nach Anspruch 2, dadurch gekennzeichnet, daß - bezogen auf das Polymer und gegebenenfalls Füllstoff - das wäßrige Medium 0,1 bis 2 Gew.-% Trialkylaminoxid enthält.

4. Verfahren nach Anspruch 3, dadurch gekennzeichnet, daß der Gehalt an Aminoxid 0,2 bis 0,5 Gew.-% beträgt.

5. Verfahren nach einem oder mehreren der vorhergehenden Ansprüche, in denen das Aminoxid der Formel

$$R^1 R^2 R^3 N \rightarrow O$$

in der $R^1$ einen Alkylrest von 6 bis 22 C-Atomen oder ein Gemisch solcher Alkylreste, $R^2$ die Bedeutung von $R^1$ hat oder für einen Alkylrest von 1 bis 4 C-Atomen steht und $R^3$ ein Alkylrest von 1 bis 4 C-Atomen bedeutet, entspricht.

6. Verwendung der nach einem der vorhergehenden Ansprüche erhaltenen Formpulver zur Herstellung von Sinterkörpern.

**Claims**

1. A process for the preparation of a free-flowing molding powder, which comprises agglomerating a finely divided non free-flowing powder of at least one optionally modified suspension polytetrafluoroethylene in an aqueous medium which contains at least one trialkylamine oxide, and drying the agglomerates.

2. A process as claimed in claim 1, wherein at least one filler is added, so that the molding powder contains up to 75 % by weight of filler(s) and, to make up to 100 % by weight, optionally modified polytetrafluoroethylene.

3. A process as claimed in claim 2, wherein - based on the polymer and optionally filler - the aqueous medium contains 0.1 to 2 % by weight of trialkylamine oxide.

4. A process as claimed in claim 3, wherein the content of amine oxide is 0.2 to 0.5 % by weight.

5. A process as claimed in one or more of the preceding claims, in which the amine oxide corresponds to the formula

$$R^1 R^2 R^3 N \rightarrow O$$

in which $R^1$ is an alkyl radical having 6 to 22 carbon atoms or a mixture of such alkyl radicals, $R^2$ has the meaning of $R^1$ or is an alkyl radical having 1 to 4 carbon atoms and $R^3$ is an alkyl radical having 1 to 4 carbon atoms.

6. The application of a molding powder as obtained in one or more of the preceding claims for the production of sintered compacts.

**Revendications**

1. Procédé de préparation d'une poudre à mouler apte à l'écoulement, caractérisé en ce que l'on agglomère une poudre finement divisée, inapte à l'écoulement, constituée d'au moins un polytétrafluoroéthylène, éventuellement modifié, en suspension dans un milieu aqueux, qui contient au moins un oxyde de trialkylamine et que l'on sèche les agglomérats.

2. Procédé selon la revendication 1, caractérisé en ce que l'on ajoute au moins une charge, de sorte que la poudre à mouler contienne jusqu'à 75% en poids de charge(s) et, en complétant à 100% en poids, du polytétrafluoroéthylène éventuellement modifié.

3. Procédé selon la revendication 2, caractérisé en ce que, - par rapport au polymère et éventuellement à la charge - le milieu aqueux contient 0,1 à 2% en poids d'oxyde de trialkylamine.

4. Procédé selon la revendication 3, caractérisé en ce que la teneur en oxyde d'amine est de 0,2 à 0,5% en poids.

5. Procédé selon une ou plusieurs des revendications précédentes, dans lesquelles l'oxyde d'amine correspond à la formule

$$R^1R^2R^3N \rightarrow O$$

dans laquelle $R^1$ représente un groupe alkyle de 6 à 22 atomes de carbone ou un mélange de tels groupes alkyle, $R^2$ a la même signification que $R^1$ ou représente un groupe alkyle de 1 à 4 atomes de carbone et $R^3$ représente un groupe alkyle de 1 à 4 atomes de carbone.

6. Utilisation de la poudre à mouler obtenue selon une des revendications précédentes pour la préparation de pièces de frittage.